(19) 

**Europäisches Patentamt**

**European Patent Office**

**Office européen des brevets**

(11) **EP 2 906 910 B1**

(12) **EUROPÄISCHE PATENTSCHRIFT**

(45) Veröffentlichungstag und Bekanntmachung des Hinweises auf die Patenterteilung:
**26.04.2017 Patentblatt 2017/17**

(21) Anmeldenummer: **13730111.5**

(22) Anmeldetag: **12.06.2013**

(51) Int Cl.:
*G01D 5/245* (2006.01)   *G01D 5/347* (2006.01)
*G06F 3/0362* (2013.01)

(86) Internationale Anmeldenummer:
**PCT/EP2013/001732**

(87) Internationale Veröffentlichungsnummer:
**WO 2014/056556 (17.04.2014 Gazette 2014/16)**

(54) **VERFAHREN ZUM BETREIBEN EINER BEDIENVORRICHTUNG FÜR EIN KRAFTFAHRZEUG**

METHOD FOR OPERATING AN OPERATING DEVICE FOR A MOTOR VEHICLE

PROCÉDÉ D'UTILISATION D'UN DISPOSITIF DE COMMANDE POUR UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.10.2012 DE 102012019995**

(43) Veröffentlichungstag der Anmeldung:
**19.08.2015 Patentblatt 2015/34**

(73) Patentinhaber: **Audi AG**
**85045 Ingolstadt (DE)**

(72) Erfinder:
• **MAIWALD, Stefan**
**85055 Ingolstadt (DE)**
• **KRUG, Joachim**
**93339 Riedenburg (DE)**

(74) Vertreter: **Brandt, Kai**
**Audi AG**
**Patentabteilung I/EZ-1**
**85045 Ingolstadt (DE)**

(56) Entgegenhaltungen:
EP-A1- 1 674 831   DE-A1- 19 915 988
DE-A1-102005 055 307   DE-A1-102010 056 271
FR-A1- 2 958 761

**Beschreibung**

Die vorliegende Erfindung betrifft ein Verfahren zum Betreiben einer Bedienvorrichtung für ein Kraftfahrzeug. Überdies betrifft die vorliegende Erfindung eine Bedienvorrichtung für ein Kraftfahrzeug.

Zur Bedienung von Funktionseinrichtungen eines Kraftfahrzeugs sind entsprechende Bedienvorrichtungen vorgesehen. Diese können einen Drehsteller oder Drehencoder umfassen. Heutige Drehsteller besitzen mechanische Raststellungen, in denen sie entlang ihrer Drehrichtung einrasten. Diese Rastpositionen werden vom Nutzer bzw. von der Bedienperson haptisch wahrgenommen. Derartige manuelle Drehsteller sind seit Jahren millionenfach im Einsatz und werden beispielsweise als Lautstärkesteller, in Klimabedienteilen oder der zentralen Eingabeeinheit im Kraftfahrzeug verwendet. Die Drehsteller weisen meist entsprechende Kodierelemente auf, die mit einem Sensor erfasst werden können. Die Kodierelemente können einen oder mehrere Magnete umfassen, die mit einem Hall-Sensor erfasst werden. Des Weiteren können die Kodierelemente durch elektrische Kontakte gebildet sein, die durch Schleifkontakte erfasst werden. Die Kodierelemente können auch durch entsprechende Aussparung gebildet sein, die mit einem optischen Sensor erfasst werden können.

In diesem Zusammenhang beschreibt die DE 10 2005 055 307 A1 einen Drehsteller mit inkrementellem Drehwinkelgeber für den Einsatz in einem Kraftfahrzeug. An der Welle des Drehstellers ist ein Kodierelement mit periodischen Ausnehmungen befestigt. Durch die Drehung des Drehstellers und der damit verbundenen Drehung des Kodierelements drehen sich die Ausnehmungen durch den Erfassungsbereich der Lichtschranke. Dies verursacht eine Modulation der analogen Ausgangsspannung eines Fotosensors. Mittels einer Auswerteelektronik kann dem Verlauf der analogen Ausgangsspannung ein inkrementeller Drehwinkel des Drehstellers zugeordnet werden.

Aus der DE 10 2006 060 808 A1 ist ein Winkelsensor zur Drehwinkelerfassung eines Bauteils mit einem ring- oder kreisscheibenartigen Magneten bekannt. Im Bereich des Magnetfelds des Magneten ist ein Hall-Element angeordnet, von dem ein von der Drehposition des Magneten abhängiges Digitalsignal erzeugbar ist. Zudem ist ein Analogsignal eines magnetoresistiven Sensorelements in Abhängigkeit von dem Digitalsignal einem ersten 180°-Winkelbereich oder einem dem ersten Winkelbereich folgenden zweiten 180°-Winkelbereich eines 360°-Winkelbereichs zuordenbar.

Des Weiteren ist in der US 2012/0056761 A1 eine drehbare Eingabevorrichtung für ein Kraftfahrzeug beschrieben. Zum Erfassen des Drehwinkels der Eingabevorrichtung kann ein optischer oder magnetischer Sensor verwendet werden.

Zudem beschreibt die US 2010/0057273A1 ein Steuersystem für ein Kraftfahrzeug. Das Steuersystem weist ein Bedienelement auf, das als Dreh- oder Drücksteller ausgebildet sein kann.

Zudem beschreibt die DE 10 2009 051730 A1 eine Multifunktions-Bedieneinrichtung eines Kraftfahrzeugs mit einem Drehsteller. An dem Drehsteller ist zumindest ein Magnet angeordnet, der berührungslos mit einem Hall-Sensor zusammenwirkt. Des Weiteren ist ein Drehhaptikelement vorgesehen, mit dem einzelne Raststufen für den Drehsteller vorgegeben werden.

Die DE 199 15 988 A1 beschreibt eine Messeinrichtung zur Ermittlung der Stellung eines Stellorgans. Die Messeinrichtung umfasst einen Dauermagneten, der auf einer Achse befestigt ist und der mit einem Stellorgan in mechanischer Verbindung steht, und einen Hall-Sensor. Dabei werden die mit dem Hall-Sensor erfassten Ist-Werte mit Soll-Werten verglichen.

Es ist Aufgabe der vorliegenden Erfindung, die Bedienung einer Bedienvorrichtung, insbesondere eines Drehstellers, einfacher und intuitiver zu gestalten.

Diese Aufgabe wird durch ein Verfahren mit den Merkmalen des Patentanspruchs 1 sowie durch eine Bedienvorrichtung mit den Merkmalen des Patentanspruchs 7 gelöst. Vorteilhafte Weiterbildungen der vorliegenden Erfindung sind in den Unteransprüchen angegeben.

Das erfindungsgemäße Verfahren zum Betreiben einer Bedienvorrichtung für ein Kraftfahrzeug, wobei die Bedienvorrichtung einen Drehsteller, der an einem Halteelement drehbar gelagert ist und ein Kodierelement aufweist, umfasst das Erfassen eines ersten Ist-Sensorwerts anhand einer Kodierung des Kodierelements in der aktuellen Drehstellung des Drehstellers, das Bestimmen eines aktuellen Drehwinkels zwischen dem Drehsteller und dem Halteelement auf Grundlage des erfassten ersten Ist-Sensorwerts, das Bereitstellen jeweils zumindest eines Soll-Sensorwerts zu vorbestimmten Drehwinkeln zwischen dem Drehsteller und dem Halteelement, das Zuordnen des erfassten ersten Ist-Sensorwerts zu einem der zumindest einen Soll-Sensorwerte und das Anpassen des ersten Ist-Sensorwerts an dem ihm zugeordneten Soll-Sensorwert für die Bestimmung des aktuellen Drehwinkels.

Die Bedienvorrichtung kann im Armaturenbrett oder in der Mittelkonsole des Kraftfahrzeugs angeordnet sein. Das Kraftfahrzeug kann auch mehrere Bedienvorrichtungen umfassen, mit denen Funktionseinrichtungen, wie z.B. eine Klimaanlage, ein Navigationssystem, ein Bedieneinrichtung mit dazugehöriger Anzeige, ein Unterhaltungssystem oder dergleichen angesteuert werden können. Die Bedienvorrichtung umfasst einen Drehsteller, der auch als Dreh-/Drücksteller ausgebildet sein kann. Die Bedienvorrichtung umfasst ein Kodierelement, das beispielsweise an dem Drehsteller angeordnet sein kann. Das Kodierelement kann beispielsweise entlang der Umfangsrichtung des Drehstellers oder einer Welle des Drehstellers angeordnet sein. Zudem umfasst die Bedienvorrichtung eine Sensoreinrichtung, mit der eine Kodierung des Kodierelements erfasst werden kann. Die Sensoreinrichtung kann beispielsweise ortsfest an dem Halteelement oder einem Gehäuse der Bedienvorrichtung angeordnet sein. Durch die Kodierung des Kodierelements wird in der Sensoreinrichtung zumindest ein Ist-Sensorwert erzeugt. Das Kodierelement kann beispielsweise einen oder mehrere Magnete umfassen und die Sensoreinrichtung kann einen Hall-Sensor umfassen. Alternativ dazu kann das Kodierelement Aussparungen oder eine vorbestimmte Geometrie aufweisen, die mit einem optischen Sensor der Sensoreinrichtung abgetastet werden kann. Ebenso ist die Verwendung von Schleifkontakten denkbar.

Auf einer Speichereinrichtung der Bedienvorrichtung können vier vorgegebene Drehwinkel des Drehstellers zu dem Halteelement Soll-Sensorwerte gespeichert sein. Diese Soll-Sensorwerte können im Vorfeld mit einem Präzisionsdrehgeber für vorbestimmte Winkel entsprechend erfasst worden sein. Die Soll-Sensorwerte können auch vom Hersteller in der Speichereinrichtung abgelegt sein. Im Betrieb der Bedienvorrichtung wird nun ein Ist-Sensorwert anhand der Kodierung des Kodierelements erfasst. Dieser Ist-Sensorwert wird mit den Soll-Sensorwerten vergleichen, die in dem Speicher abgelegt sind. Der Ist-Sensorwert wird nun dem nächstliegenden Soll-Sensorwert zugeordnet. Der Ist-Sensorwert wird nun an dem ihm zugeordneten Soll-Sensorwert angepasst. Somit kann eine entsprechende Kalibrierung des Ist-Sensorwerts fortlaufend im Betrieb der Bedienvorrichtung durchgeführt werden. Durch das Anpassen des Ist-Sensorwerts an den Soll-Sensorwert kann der aktuelle Drehwinkel genauer bestimmt werden.

Zudem werden dem Drehsteller in entlang seiner Drehrichtung eine Mehrzahl von Raststufen vorgeben und der erste Ist-Sensorwert wird dem zumindest einen Soll-Sensorwert zwischen zwei der Raststufen zugeordnet. Die Bedienvorrichtung kann eine Rasteinrichtung aufweisen, mit der dem Drehsteller mehrere Raststufen bzw. Rastpositionen entlang seiner Drehrichtung vorgegeben werden. Diese Rastpositionen können mechanisch mit einer Rastkurve oder durch entsprechende Magnete erzeugt werden. Bei der Drehung des Drehstellers rastet dieser in den Rastpositionen ein. Durch die Zuordnung des Ist-Sensorwerts, der anhand der Kodierung des Kodierelements bestimmt wird, zu dem Soll-Sensorwert kann nun auch der Drehwinkel zwischen den einzelnen Raststufen besonders genau erfasst werden. Bei der Bedienvorrichtung sind die diskreten Rastpositionen vorhanden, die durch die haptische Rückmeldung beim Benutzer ein hochwertiges Bediengefühl hervorrufen. Darüber hinaus können leichte Auslenkungen des Drehstellers vor dem Einrasten in die nächste Rastposition mit der Sensoreinrichtung erkannt werden. Dadurch können auf einfache Weise neben den Rastpositionen auch die Zwischenstellungen zwischen den Raststufen mit einer hohen Auflösung erfasst werden und entsprechend weiterverarbeitet werden.

In einer Ausführungsform wird der erste Ist-Sensorwert zum Anpassen mit einem Faktor multipliziert und/oder zu dem ersten Ist-Sensorwert wird ein Offset addiert. Um den Ist-Sensorwert im Betrieb der Bedienvorrichtung schrittweise an den jeweiligen Soll-Sensorwert anpassen zu können, kann der jeweilige Ist-Sensorwert mit einem Faktor multipliziert werden. Alternativ oder zusätzlich kann ein Offset für den Ist-Sensorwert bestimmt werden. Somit kann der Ist-Sensorwert besonders einfach an den Soll-Sensorwert angepasst werden.

Ferner werden anhand der Kodierung des Kodierelements der erste und ein zweiter Ist-Sensorwert für die vorgegebene Drehstellung ermittelt und zu vorbestimmten Drehwinkeln werden jeweils ein erster und ein zweiter Soll-Sensorwert bereitgestellt. Die Bedienvorrichtung kann zwei Sensoreinrichtungen aufweisen, die entlang der Drehrichtung des Drehstellers versetzt zueinander angeordnet sind. Somit wird anhand der Kodierung des Kodierelements mit der ersten Sensoreinrichtung ein erster Ist-Sensorwert und mit der zweiten Sensoreinrichtung ein zweiter Ist-Sensorwert bereitgestellt. In der Speichereinrichtung der Bedienvorrichtung werden für jeden vorbestimmten Drehwinkel des Drehstellers zu dem Halteelement ein erster und ein zweiter Soll-Sensorwert vorgegeben. Durch die Erfassung von zwei Ist-Sensorwerten kann der Drehwinkel zwischen dem Drehsteller und dem Halteelement genauer erfasst werden.

Des Weiteren wird der erste Ist-Sensorwert dem ersten Soll-Sensorwert zugeordnet und/oder der zweite Ist-Sensorwert wird dem zweiten Soll-Sensorwert zugeordnet. Hierzu kann für jeden vorgegebenen Drehwinkel der dazugehörige Wert des ersten Soll-Sensorwerts gegenüber dem dazugehörigen zweiten Soll-Sensorwert in einem Diagramm aufgetragen werden. Somit kann das Messwertepaar des ersten Ist-Sensorwerts und des zweiten Ist-Sensorwerts dem entsprechenden Paar von erstem Soll-Sensorwert und zweitem Soll-Sensorwert einfach zugeordnet werden.

Bevorzugt werden der erste Ist-Sensorwert anhand einer Differenz des ersten Ist-Sensorwerts und des ersten Soll-Sensorwerts und/oder der zweite Ist-Sensorwert anhand einer Differenz des zweiten Ist-Sensorwerts und des zweiten Soll-Sensorwerts angepasst. Das Paar der Ist-Sensorwerte wird mit den entsprechenden Paaren der Soll-Sensorwerte verglichen. Dazu wird der Abstand des Paares der Ist-Sensorwerte zu den jeweiligen Paaren der Soll-Sensorwerte bestimmt. Der Abstand berechnet sich aus der Summe des Betrages des ersten Ist-Sensorwerts abzüglich des ersten Soll-Sensorwerts und des Betrags des zweiten Ist-Sensorwerts abzüglich des zweiten Soll-Sensorwerts. Um den Abstand zu bestimmen, können auch andere Verfahren, wie beispielsweise die binäre Suche, verwendet werden. Die Summe der Abstandsquadrate ist ebenso geeignet, wie andere gängige Methoden zur Abstandsquantifizierung. Bei ausreichend häufiger Signalauswertung ergeben sich dann geringste Abstand zwischen dem Paar der Ist-Sensorwerte und dem dazugehörigen Paar der Soll-Sensorwerte. Dabei kann die Abstandsermittlung immer mit den angepassten Ist-Sensorwerten durchgeführt werden.

Somit kann der aktuelle Drehwinkel des Drehstellers besonders exakt bestimmt werden. Zudem können Fertigungstoleranzen, Temperatureinflüsse, der Drift der Sensoreinrichtung oder dergleichen ausgeglichen werden. Durch die hier beschriebene Kalibrierung liegen die Ist-Sensorwerte immer sehr dicht an den Soll-Sensorwerten, so dass die Fehler durch das Abstandsverfahren minimiert werden.

In einer weiteren Ausführungsform werden der erste Ist-Sensorwert und/oder der zweite Ist-Sensorwert in einer Drehposition des Drehstellers angepasst, indem der erste Ist-Sensor in einem vorgegebenen Wertebereich liegt. Zunächst wird eine Grobkalibrierung der Bedienvorrichtung durchgeführt. Bei der Grobkalibrierung kann der Sensor insbesondere so angeordnet sein, dass der erste Ist-Sensorwert und der zweite Ist-Sensorwert im Wesentlichen den gleichen Wert aufweisen. Eine derartige Grobkalibrierung kann beispielsweise beim Systemstart durchgeführt werden, um eine Gesamtverstärkung zum Anpassen der Ist-Sensorwerte an die Soll-Sensorwerte zu ermitteln. Die Grobkalibrierung ist besonders effizient, wenn der erste Ist-Sensorwert und der zweite Ist-Sensorwert im Wesentlichen gleiche Werte aufweisen und ein geringer Offset zum Anpassen der Ist-Sensorwerte vorhanden ist. Dabei erfolgt die Grobkalibrierung vor der Benutzung des Drehstellers. Vor der Kalibrierung muss die Abstandsiteration abgeschlossen sein.

In einer weiteren Ausführungsform wird der Faktor im Betrieb der Bedienvorrichtung in einer Position des Drehstellers bestimmt, in der der erste Ist-Sensorwert oder der zweite Ist-Sensorwert ein Maximum aufweisen. Anschließend an die Grobkalibrierung kann eine entsprechende Feinkalibrierung durchgeführt werden. In dieser wird zunächst der Faktor zum Anpassen der Ist-Sensorwerte an die Soll-Sensorwerte bestimmt. Die Bestimmung des Faktors kann während der Betätigung der Bedienvorrichtung durch den Benutzer erfolgen. In der Nähe eines Maximums des ersten Ist-Sensorwerts wird der Drehwinkel weitgehend von dem zweiten Ist-Sensorwert bestimmt. In diesem Bereich kann der Faktor für den ersten Ist-Sensorwert bestimmt werden. Der Faktor für den zweiten Ist-Sensorwert kann in analoger Weise bestimmt werden.

In einer weiteren Ausgestaltung wird der Offset im Betrieb der Bedienvorrichtung in einer Position des Drehstellers bestimmt, in der der erste Ist-Sensorwert oder der zweite Ist-Sensorwert ein Minimum aufweist. Die Bestimmung bzw. die Kalibrierung des Offsets erfolgt während der Betätigung der Bedienvorrichtung durch den Bediener. In einem Bereich, in dem der erste Ist-Sensorwert ein Minimum aufweist, wird der Drehwinkel weitgehend vom zweiten Ist-Sensorwert bestimmt. In diesem Bereich kann der Offset für den ersten Ist-Sensorwert bestimmt werden. Der Offset für den zweiten Ist-Sensorwert kann dann in analoger Weise bestimmt werden.

Die erfindungsgemäße Bedienvorrichtung für ein Kraftfahrzeug umfasst einen Drehsteller, der an einem Halteelement drehbar gelagert ist, ein Kodierelement, zumindest eine Sensoreinrichtung zum Erfassen eines ersten Ist-Sensorwerts anhand einer Kodierung des Kodierelements in der aktuellen Drehstellung des Drehstellers und eine Recheneinrichtung zum Bestimmen eines aktuellen Drehwinkels zwischen dem Drehsteller und dem Halteelement auf Grundlage des erfassten ersten Ist-Sensorwerts, wobei die Bedienvorrichtung eine Speichereinrichtung zum Bereitstellen jeweils zumindest eines Soll-Sensorwerts zu vorbestimmten Drehwinkeln zwischen dem Drehsteller und dem Halteelement aufweist und die Recheneinrichtung dazu ausgebildet ist, den erfassten ersten Ist-Sensorwert einem der zumindest einen Soll-Sensorwerte zuzuordnen und den ersten Ist-Sensorwert für die Bestimmung des aktuellen Drehwinkels an dem ihm zugeordneten Soll-Sensorwert anzupassen.

Die zuvor im Zusammenhang mit dem erfindungsgemäßen Verfahren beschriebenen Vorteile und Weiterbildungen können in gleicher Weise auf die erfindungsgemäße Bedienvorrichtung übertragen werden.

Die vorliegende Erfindung wird nun anhand der beigefügten Zeichnungen näher erläutert. Dabei zeigen:

Fig. 1 eine Bedienvorrichtung für ein Kraftfahrzeug in einer schematischen Darstellung;

Fig. 2 eine Bedienvorrichtung für ein Kraftfahrzeug in einer weiteren Ausführungsform;

Fig.3 die Signale vom ersten Ist-Sensorwerten und zweiten Ist-Sensorwerten in Abhängigkeit von der Zeit;

Fig. 4 ein Diagramm, in dem die ersten Ist-Sensorwerte über die zweiten Ist-Sensorwerte aufgetragen sind;

Fig.5 in dem die ersten Soll-Sensorwerte über die zweiten Soll-Sensorwerte aufgetragen sind; und

Fig. 6 ein Diagramm gemäß Fig. 5 in einer weiteren Ausführungsform. Die nachfolgend näher geschilderten Ausführungsbeispiele stellen bevorzugte Ausführungsformen der vorliegenden Erfindung dar.

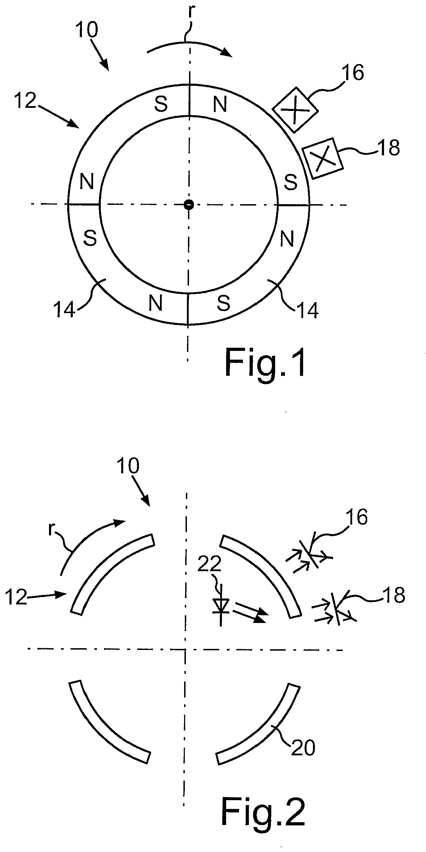

Fig. 1 zeigt eine schematische Darstellung einer Bedienvorrichtung 10 für ein Kraftfahrzeug in einer Draufsicht. Die Bedienvorrichtung 10 dient zum Bedienen einer Funktionseinrichtung eines Kraftfahrzeugs. Eine solche Funktionseinrichtung kann eine Klimaanlage, ein Navigationssystem, eine Bedieneinrichtung mit dazugehöriger Anzeige, ein Unterhaltungssystem oder dergleichen sein. Die Bedienvorrichtung 10 umfasst einen Drehsteller, der an einem Halteelement drehbar gelagert ist (hier nicht dargestellt). Die Bedienvorrichtung 10 weist eine Rasteinrichtung auf, durch die dem Drehsteller entlang der Drehrichtung r mehrere Raststufen vorgegeben werden.

Des Weiteren umfasst die Bedienvorrichtung 10 ein Kodierelement 12. Das Kodierelement 12 kann an dem Drehsteller angeordnet sein. Vorliegend ist das Kodierelement 12 durch vier Permanentmagnete 14 gebildet, die entlang der Umfangsrichtung der Bedienvorrichtung 10 angeordnet sind. Des Weiteren umfasst die Bedienvorrichtung 10 eine erste Sensoreinrichtung 16 und eine zweite Sensoreinrichtung 18, die im vorliegenden Beispiel als Hall-Sensoren ausgebildet sind. Der Abstand zwischen den beiden Sensoreinrichtungen 16, 18 entspricht die Hälfte der räumlichen Ausdehnung eines Permanentmagnets 14 entlang der Umfangsrichtung. Wenn der Drehsteller durch eine Bedienperson gedreht wird, wird auch das Kodierelement 12 mit dem Drehsteller gedreht. In den beiden Sensoreinrichtungen 16, 18 wird in Abhängigkeit von der Drehstellung des Drehstellers ein Sensorsignal erzeugt. Die Sensorsignale weisen einen im Wesentlichen analogen Verlauf auf, da der Übergang der Magnetisierung der Nordpole N und der Südpole S der Permanentmagnete 14 fließend ist. Die Sensorsignale können einem Analog-Digital-Wandler zugeführt werden, wodurch durch die erste Sensoreinrichtung 16 ein erster Ist-Sensorwert $x_{ist}$ und durch die zweite Sensoreinrichtung 18 ein zweiter Ist-Sensorwert $y_{ist}$ bereitgestellt wird.

Fig. 2 zeigt eine Bedienvorrichtung 10 in einer weiteren Ausführungsform. Hier ist das Kodierelement 12 durch vier Segmente 20 gebildet, die entlang der Umfangsrichtung der Bedienvorrichtung 10 angeordnet sind. In einem durch die Segmente 20 gebildeten Innenraum ist eine Leuchtelement 22 angeordnet. Das Leuchtelement 22 bildet zusammen mit den beiden Sensoreinrichtungen 16, 18, die im vorliegenden Beispiel als Fotosensoren ausgebildet sind, jeweils eine Lichtschranke, die bei der Drehung des Kodierelements 12 durch die Segmente 20 unterbrochen wird. Auch hier wird durch die erste Sensoreinrichtung 16 ein erster Ist-Sensorwert $x_{ist}$ und durch die zweite Sensoreinrichtung 18 ein zweiter Ist-Sensorwert $y_{ist}$ bereitgestellt.

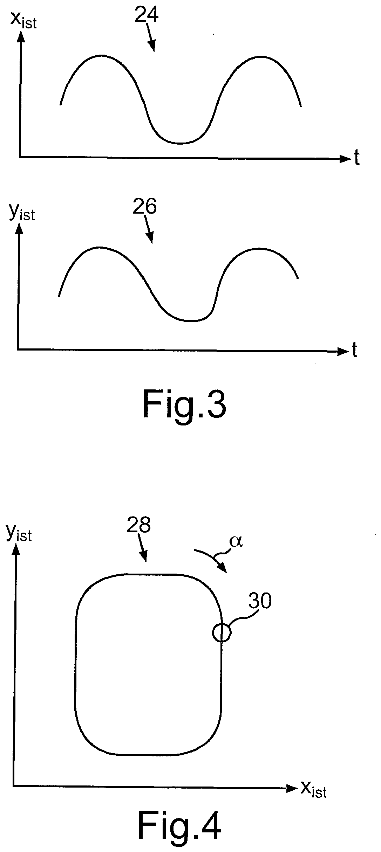

Fig. 3 zeigt in einem ersten Graph 24 den zeitlichen Verlauf des ersten Ist-Sensorwerts $x_{ist}$. Der zweite Graph 26 zeigt den zeitlichen Verlauf des zweiten Ist-Sensorwert $y_{ist}$ ist. Der zeitliche Verlauf der ersten Ist-Sensorwerte $x_{ist}$ und der zeitliche Verlauf der zweiten Ist-Sensorwerte $y_{ist}$ weisen einen im Wesentlichen sinusförmigen Verlauf auf. Dabei ist der zeitliche Verlauf der zweiten Ist-Sensorwerte $y_{ist}$ zu dem Verlauf der ersten Ist-Sensorwerte $x_{ist}$ versetzt.

Fig. 4 zeigt einen Graphen 28, in dem die zweiten Ist-Sensorwerte $y_{ist}$ in Abhängigkeit von den ersten Ist-Sensorwerten $x_{ist}$ für vorbestimmte Drehwinkel $\alpha$ des Drehstellers zu dem Halteelement aufgetragen sind. Dabei können die Ist-Sensorwerte $x_{ist}$ und $y_{ist}$ für vorgegebene Drehwinkel $\alpha$ zwischen zwei Raststufen des Drehstellers aufgetragen sein. Wenn der Drehsteller in eine bestimmte Drehstellung bewegt wird, wird von der ersten Sensoreinrichtung 16 ein erster Ist-Sensorwert $x_{ist}$ und durch die zweite Sensoreinrichtung 18 ein zweiter Ist-Sensorwert $y_{ist}$ bereitgestellt. Dies ist in Fig. 4 durch den Punkt 30 gekennzeichnet.

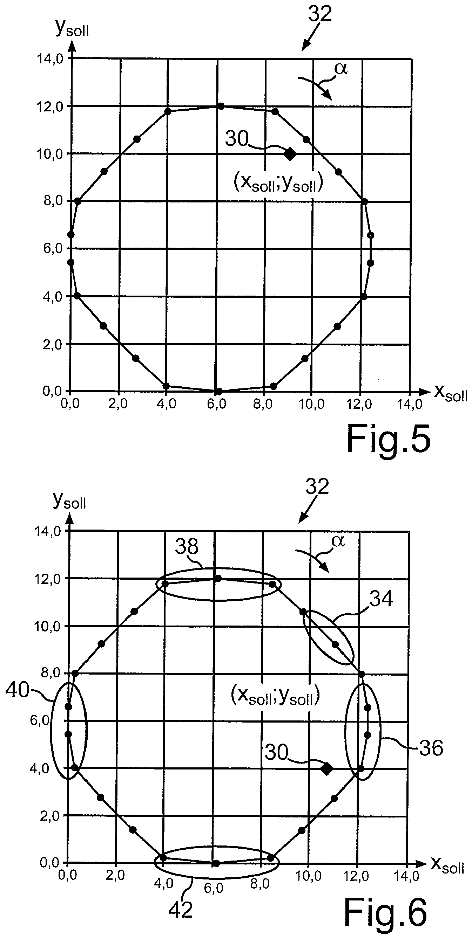

Fig. 5 zeigt einen Graphen 32, in dem zweiten Soll-Sensorwerte $y_{soll}$ in Abhängigkeit von den ersten Soll-Sensorwerten $x_{soll}$ für vorbestimmte Drehwinkel $\alpha$ des Drehstellers zu dem Halteelement aufgetragen sind. Die Soll-Sensorwerte $x_{soll}$ und $y_{soll}$ sind beispielsweise anhand von Messungen mit einem Drehwinkelgeber ermittelt. Die Soll-Sensorwerte $x_{soll}$ und $y_{soll}$ können für vorbestimmte Drehwinkel $\alpha$ zwischen zwei Raststufen des Drehstellers ermittelt worden sein. In dem Graph 32 ist auch der Punkt 30 dargestellt, der die aktuellen Ist-Sensorwerte $x_{ist}$ und $y_{ist}$ in der aktuellen Drehstellung des Drehstellers kennzeichnet.

Die beiden Ist-Sensorwerte $x_{ist}$ und $y_{ist}$ werden nun einem Paar von Soll-Sensorwerten $x_{soll}$ und $y_{soll}$ zugeordnet. Dazu wird der Abstand des Paars der Ist-Sensorwerte $x_{ist}$ und $y_{ist}$ zu dem momentan nächstliegenden Paar von Soll-Sensorwerten $x_{soll}$ und $y_{soll}$ bestimmt. Dabei ist es auch vorgesehen, dass der Abstand der Ist-Sensorwerte $x_{ist}$ und $y_{ist}$ zu dem beiden Paaren Soll-Sensorwerten $x_{soll}$ und $y_{soll}$ bestimmt wird, die entlang des Drehwinkels $\alpha$ vor und hinter dem momentan nächstliegenden Paar von Soll-Sensorwerten $x_{soll}$ und $y_{soll}$ liegen. Der Abstand kann nach folgender Formel berechnet werden:

$$\text{Abstand} = |x_{ist} - x_{soll}| + |y_{ist} - y_{soll}|.$$

Das Paar von Ist-Sensorwerte $x_{ist}$ und $y_{ist}$ wird nun dem Paar von Soll-Sensorwerten $x_{soll}$ und $y_{soll}$ zugeordnet, dass den geringsten Abstand zu den Ist-Sensorwerte $x_{ist}$ und $y_{ist}$ aufweist. Zum Anpassen der Ist-Sensorwerte $x_{ist}$ und $y_{ist}$ können die Ist-Sensorwerte $x_{ist}$ und $y_{ist}$ mit einem Faktor multipliziert werden. Alternativ oder zusätzlich kann zu den Ist-Sensorwerte $x_{ist}$ und $y_{ist}$ ein Offset addiert werden.

Die Anpassung der Ist-Sensorwerte $x_{ist}$ und $y_{ist}$ ist in Fig. 6 verdeutlicht. Zunächst wird eine Grobkalibrierung vorgenommen. Als Ausgangswert wird für den Offset der Wert null und für den Faktor der Wert eins vorgegeben. Die Grobkalibrierung wird in einer Ruhestellung des Bedienelements durchgeführt. Die Grobkalibrierung wird bevorzugt durchgeführt, wenn sich der Drehsteller in einer Drehstellung befindet, in der die Ist-Sensorwerte $x_{ist}$ und $y_{ist}$ im Wesentlichen gleich sind. Dies ist durch den Bereich 34 gekennzeichnet. In dieser Stellung des Drehstellers kann ein Faktor zum Anpassen der Ist-Sensorwerte $x_{ist}$ und $y_{ist}$ nach folgender Formel bestimmt werden:

$$\text{Faktor} = (x_{soll} + y_{soll}) / (x_{ist} + y_{ist}).$$

Anschließend erfolgt eine Faktorkalibrierung der Ist-Sensorwerte $x_{ist}$ und $y_{ist}$. Die Kalibrierung des Faktors erfolgt im Betrieb der Bedienvorrichtung 10. Zunächst wird der Faktor für den ersten Ist-Sensorwert $x_{ist}$ kalibriert. Dies erfolgt in einer Drehstellung des Drehstellers, in der der erste Ist-Sensorwert $x_{ist}$ ein Maximum aufweist. Dies ist in Fig. 6 durch den Bereich 36 gekennzeichnet. In diesem Bereich wird der Drehwinkel $\alpha$ vor allem durch den ersten Ist-Sensorwert $y_{ist}$ bestimmt. Der Faktor berechnet sich wie folgt:

$$\text{Faktor} = x_{soll} \, / \, x_{ist}.$$

Anschließend wird der Faktor für den zweiten Ist-Sensorwert $y_{ist}$ kalibriert. Dies erfolgt in einer Drehstellung des Drehstellers, in der der zweite Ist-Sensorwert $y_{ist}$ ein Maximum aufweist. Dies ist durch den Bereich 38 gekennzeichnet. In diesem Bereich wird der Drehwinkel $\alpha$ vor allem durch den ersten Ist-Sensorwert $x_{ist}$ bestimmt.

Zudem erfolgt die Kalibrierung des Offsets für die Ist-Sensorwerte $x_{ist}$ und $y_{ist}$, die auch im Betrieb der Bedienvorrichtung 10 vorgenommen wird. Zunächst wird der Offset für den ersten Ist-Sensorwert $x_{ist}$ kalibriert. Dies erfolgt in einer Drehstellung des Drehstellers, in der der erste Ist-Sensorwert $x_{ist}$ ein Minimum aufweist. Dies ist durch den Bereich 40 gekennzeichnet. In diesem Bereich wird der Drehwinkel $\alpha$ vor allem durch den zweiten Ist-Sensorwert $y_{ist}$ bestimmt. Der Offset berechnet sich nach folgender Formel:

$$\text{Offset} = x_{soll} - x_{ist}.$$

Anschließend wird der Offset für den zweiten Ist-Sensorwert $y_{ist}$ kalibriert. Dies erfolgt in einer Drehstellung des Drehstellers, in der der erste Ist-Sensorwert $x_{ist}$ ein Minimum aufweist. Dies ist durch den Bereich 42 gekennzeichnet. In diesem Bereich wird der Drehwinkel $\alpha$ vor allem durch den zweiten Ist-Sensorwert $y_{ist}$ bestimmt.

**Patentansprüche**

1. Verfahren zum Betreiben einer Bedienvorrichtung (10) für ein Kraftfahrzeug, wobei die Bedienvorrichtung (10) einen Drehsteller, der an einem Halteelement drehbar gelagert ist, und ein Kodierelement (12) aufweist, mit den Schritten:

   - Erfassen eines ersten Ist-Sensorwerts ($x_{ist}$) und eines zweiten Ist-Sensorwerts ($y_{ist}$) anhand einer Kodierung des Kodierelements (12) in der aktuellen Drehstellung des Drehstellers,
   - Bestimmen eines aktuellen Drehwinkels zwischen dem Drehsteller und dem Halteelement auf Grundlage des erfassten ersten Ist-Sensorwerts ($x_{ist}$) und des zweiten Ist-Sensorwerts ($y_{ist}$),
   - Bereitstellen eines ersten Soll-Sensorwerts ($x_{soll}$) und eines zweiten Soll-Sensorwerts ($y_{soll}$) zu vorbestimmten Drehwinkeln ($\alpha$) zwischen dem Drehsteller und dem Halteelement,
   - Zuordnen des erfassten ersten Ist-Sensorwerts ($x_{ist}$) zu dem ersten Soll-Sensorwert ($x_{soll}$) und des erfassten zweiten Ist-Sensorwerts ($y_{ist}$) zu dem zweiten Soll-Sensorwert ($y_{soll}$) und

   wobei

   - zur Bestimmung des aktuellen Drehwinkels der erste Ist-Sensorwert ($x_{ist}$) an den ihm zugeordneten ersten Soll-Sensorwert ($x_{soll}$) und der zweite Ist-Sensorwert ($y_{ist}$) an den ihm zugeordneten zweiten Soll-Sensorwert ($y_{soll}$) angepasst wird,
   - der erste Ist-Sensorwert ($x_{ist}$) mit einer ersten Sensoreinrichtung (16) und der zweite Ist-Sensorwert ($y_{ist}$) mit einer zweiten Sensoreinrichtung (18) erfasst wird und dass
   - dem Drehsteller entlang seiner Drehrichtung (r) eine Mehrzahl von Raststufen vorgegeben werden und der erste Ist-Sensorwert ($x_{ist}$) dem ersten Soll-Sensorwert ($x_{soll}$) und der zweite Ist-Sensorwert ($y_{ist}$) dem zweiten Soll-Sensorwert ($y_{soll}$) zwischen zwei der Raststufen zugeordnet wird.

2. Verfahren nach Anspruch 1,
   **dadurch gekennzeichnet, dass**
   der erste Ist-Sensorwert ($x_{ist}$) und der zweite Ist-Sensorwert ($y_{ist}$) zum Anpassen mit einem Faktor multipliziert werden und/oder zu dem ersten Ist-Sensorwert ($x_{ist}$) und dem zweiten Ist-Sensorwert ($y_{ist}$) ein Offset addiert werden.

3. Verfahren nach Anspruch 1 oder 2,
   **dadurch gekennzeichnet, dass**
   zum Anpassen des ersten Ist-Sensorvuerts ($x_{ist}$) eine Differenz des ersten Ist-Sensorwerts ($x_{ist}$) und des ersten Soll-Sensorwerts ($x_{soll}$) und/oder zum Anpassen des zweiten Ist-Sensorwerts ($y_{ist}$) eine Differenz des zweiten Ist-Sensorwerts ($y_{ist}$) und des zweiten Soll-Sensorwerts ($y_{soll}$) bestimmt werden.

4. Verfahren nach einem der vorhergehenden Ansprüche,
   **dadurch gekennzeichnet, dass**
   der erste Ist-Sensorwert ($x_{ist}$) und/öder der zweite Ist-Sensorwert ($y_{ist}$) in einer Drehposition des Drehstellers angepasst werden, in dem der erste Ist-Sensorwert ($x_{ist}$) und der zweite Ist-Sensorwert ($y_{ist}$) in einem vorgegebenen Wertebereich liegen.

**5.** Verfahren nach einem der Ansprüche 2 bis 4, **dadurch gekennzeichnet, dass** der Faktor im Betrieb der Bedienvorrichtung in einer Position des Drehstellers bestimmt wird, in der der erste Ist-Sensorwert ($x_{ist}$) oder der zweite Ist-Sensorwert ($y_{ist}$) ein Maximum aufweist.

**6.** Verfahren nach einem der Ansprüche 2 bis 5, **dadurch gekennzeichnet, dass** der Offset im Betrieb der Bedienvorrichtung in einer Position des Drehstellers bestimmt wird, in der der erste Ist-Sensorwert ($x_{ist}$) oder der zweite Ist-Sensorwert ($y_{ist}$) ein Minimum aufweist.

**7.** Bedienvorrichtung (10) für ein Kraftfahrzeug mit

- einem Drehsteller, der an einem Halteelement drehbar gelagert ist,
- einem Kodierelement (12),
- einer ersten Sensoreinrichtung (16) zum Erfassen eines ersten Ist-Sensorwerts ($x_{ist}$) anhand einer Kodierung des Kodierelements (12) in der aktuellen Drehstellung des Drehstellers,
- einer zweiten Sensoreinrichtung (18) zum Erfassen eines zweiten Ist-Sensorwerts ($y_{ist}$) anhand der Kodierung des Kodierelements (12) in der aktuellen Drehstellung des Drehstellers, und
- einer Recheneinrichtung zum Bestimmen eines aktuellen Drehwinkels zwischen dem Drehsteller und dem Halteelement auf Grundlage des erfassten ersten Ist-Sensorwerts ($x_{ist}$) und des erfassten zweiten Ist-Sensorwerts ($y_{ist}$), wobei
- die Bedienvorrichtung eine Speichereinrichtung zum Bereitstellen eines ersten Soll-Sensorwerts ($x_{soll}$) und eines zweiten Soll-Sensorwerts ($y_{soll}$) zu vorbestimmten Drehwinkeln ($\alpha$) zwischen dem Drehsteller und dem Halteelement aufweist,
- die Recheneinrichtung dazu ausgebildet ist, den erfassten ersten Ist-Sensorwert ($x_{ist}$) dem ersten Soll-Sensorwert ($x_{soll}$) und den erfassten zweiten Ist-Sensorwert ($y_{ist}$) dem zweiten Soll-Sensorwert($y_{soll}$) zuzuordnen und für die Bestimmung des aktuellen Drehwinkels den ersten Ist-Sensorwert ($x_{ist}$) an den ihm zugeordneten Soll-Sensorwert ($x_{soll}$) und den zweiten Ist-Sensorwert ($y_{ist}$) an den ihm zugeordneten zweiten Soll-Sensorwert ($y_{soll}$) anzupassen und wobei
- dem Drehsteller entlang seiner Drehrichtung (r) eine Mehrzahl von Raststufen vorgegeben sind und die Recheneinrichtung dazu ausgebildet ist, den ersten Ist-Sensorwert ($x_{ist}$) dem ersten Soll-Sensorwert ($x_{soll}$) und den zweiten Ist-Sensorwert ($y_{ist}$) dem zweiten Soll-Sensorwert ($y_{soll}$) zwischen zwei der Raststufen zuzuordnen.

**Claims**

**1.** Method for operating an operating device (10) for a motor vehicle, the operating device (10) having a rotary actuator, which is mounted rotatably on a holding element, and a coding element (12), having the steps:

- detecting a first actual sensor value ($x_{ist}$) and a second actual sensor value ($y_{ist}$) with the aid of a coding of the coding element (12) in the current rotational position of the rotary actuator,
- determining a current rotation angle between the rotary actuator and the holding element on the basis of the detected first actual sensor value ($x_{ist}$) and the second actual sensor value ($y_{ist}$),
- providing a first setpoint sensor value ($x_{soll}$) and a second setpoint sensor value ($y_{soll}$) for predetermined rotational angles ($\alpha$) between the rotary actuator and the holding element,
- assigning the detected first actual sensor value ($x_{ist}$) to the first setpoint sensor value ($x_{soll}$) and the detected second actual sensor value ($y_{ist}$) to the second setpoint sensor value ($y_{soll}$),

wherein,

- in order to determine the current rotational angle, the first actual sensor value ($x_{ist}$) is adapted to the first setpoint sensor value ($x_{soll}$) assigned to it and the second actual sensor value ($y_{ist}$) is adapted to the second setpoint sensor value ($y_{soll}$) assigned to it,
- the first actual sensor value ($x_{ist}$) is detected with a first sensor apparatus (16) and the second actual sensor value ($y_{ist}$) is detected with a second sensor apparatus (18), and
- a multiplicity of latching stages are defined for the rotary actuator along its rotation direction (r), and the first actual sensor value ($x_{ist}$) is assigned to the first setpoint sensor value ($x_{soll}$) and the second actual sensor value ($y_{ist}$) is assigned to the second setpoint sensor value ($y_{soll}$) between two of the latching stages.

**2.** Method according to claim 1, **characterised in that**, for the adaptation, the first actual sensor value ($x_{ist}$) and the second actual sensor value ($y_{ist}$) are multiplied by a factor and/or an offset is added to the first actual sensor value ($x_{ist}$) and to the second actual sensor value ($y_{ist}$).

**3.** Method according to claim 1 or 2, **characterised in that** a difference between the first actual sensor value ($x_{ist}$) and the first setpoint sensor value ($x_{soll}$) is determined in order to adapt the first actual sensor val-

ue ($x_{ist}$), and/or a difference between the second actual sensor value ($y_{ist}$) and the second setpoint sensor value ($y_{soll}$) is determined in order to adapt the second actual sensor value ($y_{ist}$).

4. Method according to any one of the preceding claims,
**characterised in that**
the first actual sensor value ($x_{ist}$) and/or the second actual sensor value ($y_{ist}$) are adapted in a rotational position of the rotary actuator in which the first actual sensor value ($x_{ist}$) and the second actual sensor value ($y_{ist}$) lie in a predetermined value range.

5. Method according to any one of claims 2 to 4,
**characterised in that**
the factor is determined during operation of the operating device in a position of the rotary actuator in which the first actual sensor value ($x_{ist}$) or the second actual sensor value ($y_{ist}$) has a maximum.

6. Method according to any one of claims 2 to 5,
**characterised in that**
the offset is determined during operation of the operating device in a position of the rotary actuator in which the first actual sensor value ($x_{ist}$) or the second actual sensor value ($y_{ist}$) has a minimum.

7. Operating device (10) for a motor vehicle, having,

- a rotary actuator, which is mounted rotatably on a holding element,
- a coding element (12),
- a first sensor apparatus (16) for detecting a first actual sensor value ($x_{ist}$) and with the aid of a coding of the coding element (12) in the current rotational position of the rotary actuator,
- a second sensor apparatus (18) for detecting a second actual sensor value ($y_{ist}$) with the aid of the coding of the coding element (12) in the current rotational position of the rotary actuator, and
- a computing apparatus for determining a current rotation angle between the rotary actuator and the holding element on the basis of the detected first actual sensor value ($x_{ist}$) and the detected second actual sensor value ($y_{ist}$),
- the operating device has a memory apparatus for providing a first setpoint sensor value ($x_{soll}$) and a second setpoint sensor value ($y_{soll}$) for predetermined rotational angles ($\alpha$) between the rotary actuator and the holding element,
- the computing apparatus is configured in order to assign the detected first actual sensor value ($x_{ist}$) to the first setpoint sensor value ($x_{soll}$) and the detected second actual sensor value ($y_{ist}$) to the second setpoint sensor value ($y_{soll}$) and, in order to determine the current rotation angle, to adapt the first actual sensor value ($x_{ist}$) to the first setpoint sensor value ($x_{soll}$) assigned to it and the second actual sensor value ($y_{ist}$) to the second setpoint sensor value ($y_{soll}$) assigned to it, wherein
- a multiplicity of latching stages are defined for the rotary actuator along its rotation direction (r), and the computing apparatus is configured in order to assign the first actual sensor value ($x_{ist}$) to the first setpoint sensor value ($x_{soll}$) and the second actual sensor value ($y_{ist}$) to the second setpoint sensor value ($y_{soll}$) between two of the latching stages.

**Revendications**

1. Procédé de fonctionnement d'un dispositif de commande (10) pour un véhicule automobile, dans lequel le dispositif de commande (10) comporte un actionneur rotatif qui est logé sur un élément de maintien de manière à pouvoir tourner et un élément de codage (12),
avec les étapes :

- détection d'une première valeur de capteur réelle ($x_{ist}$) et d'une deuxième valeur de capteur réelle ($y_{ist}$) à l'aide d'un codage de l'élément de codage (12) dans la position de rotation actuelle de l'actionneur rotatif,
- détermination d'un angle de rotation actuel entre l'actionneur rotatif et l'élément de maintien sur la base de la première valeur de capteur réelle ($x_{ist}$) détectée et de la deuxième valeur de capteur réelle ($y_{ist}$),
- fourniture d'une première valeur de capteur de consigne ($x_{soll}$) et d'une deuxième valeur de capteur de consigne ($y_{soll}$) correspondant à des angles de rotation ($\alpha$) prédéterminés entre l'actionneur rotatif et l'élément de maintien,
- association de la première valeur de capteur réelle ($x_{ist}$) détectée à la première valeur de capteur de consigne ($x_{soll}$) et de la deuxième valeur de capteur réelle ($y_{ist}$) détectée à la deuxième valeur de capteur de consigne ($y_{soll}$),

et dans lequel,

- pour déterminer l'angle de rotation actuel, on adapte la première valeur de capteur réelle ($x_{ist}$) à la première valeur de capteur de consigne ($x_{soll}$) qui lui est associée et la deuxième valeur de capteur réelle ($y_{ist}$) détectée à la deuxième valeur de capteur de consigne ($y_{soll}$) qui lui est associée,
- on détecte la première valeur de capteur réelle ($x_{ist}$) avec un premier dispositif capteur (16) et la deuxième valeur de capteur réelle ($y_{ist}$) avec

un deuxième dispositif capteur (18)

- et on prescrit à l'actionneur rotatif, le long de sa direction de rotation (r), une multiplicité de degrés crantés et on associe entre deux des degrés crantés la première valeur de capteur réelle ($x_{ist}$) à la première valeur de capteur de consigne ($x_{soll}$) et la deuxième valeur de capteur réelle ($y_{ist}$) à la deuxième valeur de capteur de consigne ($y_{soll}$).

2. Procédé selon la revendication 1, **caractérisé en ce qu'**on multiplie la première valeur de capteur réelle ($x_{ist}$) et la deuxième valeur de capteur réelle ($y_{ist}$) par un facteur en vue de l'adaptation et/ou **en ce qu'**on ajoute un décalage à la première valeur de capteur réelle ($x_{ist}$) et à la deuxième valeur de capteur réelle ($y_{ist}$).

3. Procédé selon la revendication 1 ou 2, **caractérisé en ce que**, pour adapter la première valeur de capteur réelle ($x_{ist}$), on détermine une différence entre la première valeur de capteur réelle ($x_{ist}$) et la première valeur de capteur de consigne ($x_{soll}$) et/ou, pour adapter la deuxième valeur de capteur réelle ($y_{ist}$), on détermine la différence entre la deuxième valeur de capteur réelle ($y_{ist}$) et la deuxième valeur de capteur de consigne ($y_{soll}$).

4. Procédé selon l'une des revendications précédentes, **caractérisé en ce qu'**on adapte la première valeur de capteur réelle ($x_{ist}$) et/ou la deuxième valeur de capteur réelle ($y_{ist}$) dans une position de rotation de l'actionneur rotatif dans laquelle la première valeur de capteur réelle ($x_{ist}$) et la deuxième valeur de capteur réelle ($y_{ist}$) se situent dans une plage de valeurs prédéterminée.

5. Procédé selon l'une des revendications 2 à 4, **caractérisé en ce qu'**on détermine le facteur lors du fonctionnement du dispositif de commande dans une position de l'actionneur rotatif dans laquelle la première valeur de capteur réelle ($x_{ist}$) ou la deuxième valeur de capteur réelle ($y_{ist}$) présente un maximum.

6. Procédé selon l'une des revendications 2 à 5, **caractérisé en ce qu'**on détermine le décalage lors du fonctionnement du dispositif de commande dans une position de l'actionneur rotatif dans laquelle la première valeur de capteur réelle ($x_{ist}$) ou la deuxième valeur de capteur réelle ($y_{ist}$) présente un minimum.

7. Dispositif de commande (10) pour un véhicule automobile avec

- un actionneur rotatif qui est logé sur un élément de maintien de manière à pouvoir tourner,

- un élément de codage (12),
- un premier dispositif capteur (16) pour détecter une première valeur de capteur réelle ($x_{ist}$) à l'aide d'un codage de l'élément de codage (12) dans la position de rotation actuelle de l'actionneur rotatif,
- un deuxième dispositif capteur (18) pour détecter une deuxième valeur de capteur réelle ($y_{ist}$) à l'aide du codage de l'élément de codage (12) dans la position de rotation actuelle de l'actionneur rotatif,
- un dispositif de calcul pour déterminer un angle de rotation actuel entre l'actionneur rotatif et l'élément de maintien sur la base de la première valeur de capteur réelle ($x_{ist}$) détectée et de la deuxième valeur de capteur réelle ($y_{ist}$) détectée,

dans lequel

- le dispositif de commande comporte un dispositif de mémorisation pour fournir une première valeur de capteur de consigne ($x_{soll}$) et une deuxième valeur de capteur de consigne ($y_{soll}$) correspondant à des angles de rotation ($\alpha$) prédéterminés entre l'actionneur rotatif et l'élément de maintien,
- le dispositif de calcul est conçu pour associer la première valeur de capteur réelle ($x_{ist}$) détectée à la première valeur de capteur de consigne ($x_{soll}$) et la deuxième valeur de capteur réelle ($y_{ist}$) détectée à la deuxième valeur de capteur de consigne ($y_{soll}$) et pour, en vue de la détermination de l'angle de rotation actuel, adapter la première valeur de capteur réelle ($x_{ist}$) à la première valeur de capteur de consigne ($x_{soll}$) qui lui est associée et la deuxième valeur de capteur réelle ($y_{ist}$) à la deuxième valeur de capteur de consigne ($y_{soll}$) qui lui est associée,
- et on prescrit à l'actionneur rotatif, le long de sa direction de rotation (r), une multiplicité de degrés crantés et le dispositif de calcul est conçu pour associer entre deux des degrés crantés la première valeur de capteur réelle ($x_{ist}$) à la première valeur de capteur de consigne ($x_{soll}$) et la deuxième valeur de capteur réelle ($y_{ist}$) à la deuxième valeur de capteur de consigne ($y_{soll}$).

Fig.1

Fig.2

$x_{ist}$

24

t

$y_{ist}$

26

t

# Fig.3

$y_{ist}$

28

α

30

$x_{ist}$

# Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005055307 A1
- DE 102006060808 A1
- US 20120056761 A1
- US 20100057273 A1
- DE 102009051730 A1
- DE 19915988 A1